**Europäisches Patentamt**

**European Patent Office**

**Office européen des brevets**

(11) Veröffentlichungsnummer: **0 074 624**
**B1**

(12) **EUROPÄISCHE PATENTSCHRIFT**

(45) Veröffentlichungstag der Patentschrift:
**20.04.88**

(21) Anmeldenummer: **82108319.3**

(22) Anmeldetag: **09.09.82**

(51) Int. Cl.⁴: **B 60 B 27/00,** F 16 D 65/10,
F 16 D 65/12

(54) **Radnabe für Personen- oder Lastwagen.**

(30) Priorität: **15.09.81 CH 5944/81**

(43) Veröffentlichungstag der Anmeldung:
**23.03.83 Patentblatt 83/12**

(45) Bekanntmachung des Hinweises auf die Patenterteilung:
**20.04.88 Patentblatt 88/16**

(84) Benannte Vertragsstaaten:
**AT DE FR GB IT NL SE**

(56) Entgegenhaltungen:
**CH - A - 422 352**
**DE - A - 2 110 482**
**DE - A - 2 539 361**
**DE - B - 1 184 563**
**FR - A - 1 554 512**
**GB - A - 1 339 601**
**US - A - 3 421 886**

(73) Patentinhaber: **GEORG FISCHER
AKTIENGESELLSCHAFT, Mühlentalstrasse 105,
CH-8201 Schaffhausen (CH)**

(72) Erfinder: **Walter, Hanspeter, Waldstrasse 8,
CH-8200 Schaffhausen (CH)**
Erfinder: **Mahnlg, Fritz, Forstweg 13,
CH-8200 Schaffhausen (CH)**

ACTORUM AG

**Beschreibung**

Die Erfindung betrifft eine Radnabe für Personen- öder Lastwagen bestehend aus einer Nabe mit angegossenem Bremskörper.

Derartige Radnaben sind in einer Ausführung aus Grauguss bekannt, die aber den heutigen Anforderungen im Automobilbau nicht mehr entspricht.

Die Grauguss-Ausführung entstammt einer Zeit in der keine grossen Anstrengungen unternommen wurden, um das Gewicht der Nabe mit Bremstrommel oder Bremsscheibe zu reduzieren. Weil Grauguss als Material verwendet wurde, waren zudem die diesbezüglichen Möglichkeiten sehr begrenzt. Aus Materialgründen wurden die bestehenden Ausführungen sehr massiv ausgeführt.

In der Folge wurde das an sich bekannte und vielversprechende Zusammengiessen der Nabe mit der Bremstrommel oder der Bremsscheibe wieder aufgegeben wurde.

Das getrennte Giessen der beiden Teile ist aber ebenfalls mit Nachteilen verbunden, so dass weiterhin ein grosses Interesse am Zusammengiessen der beiden Teile besteht, und zwar insbesondere aus den folgenden Gründen:

a) der Rundlauf ist besser,

b) tieffere Bearbeitungskosten,

c) keine Wärmebarriere zwischen den beiden Teile,

d) die fehlende Schraubverbindung ermöglicht eine Reduktion der Materialmenge im Übergangsbereich.

Aus der US-Patentschrift Nr. 3 421 886 ist eine einstückig mit dem Bremskörper gegossene Nabe bekannt. Sowohl für die Nabe als auch den Bremskörper wird Gusseisen mit Vermiculargraphit verwendet.

Die Aufgabe der vorliegenden Erfindung ist die Schaffung einer Radnabe für Personen- oder Lastwagen bestehend aus einer einstückig gegossenen Nabe mit Bremskörper, welche die Nachteile der bestehenden Ausführungen nicht aufweist.

Die zu schaffende Ausführung soll dabei vor allem

– eine möglichst geringe Wandstärke,

– eine im Vergleich zum Gewicht möglichst grosse Oberfläche,

– möglichst kleine zu bearbeitende Flächen haben und für Bremsscheiben verwendbar sein.

Diese erfindungsgemässe Aufgabe ist mittels der Lehre gemäss dem gekennzeichneten Teil des Anspruches 1 gelöst.

Ausführungsformen dieser Lehre sind in den weiteren, abhängigen Ansprüche umschrieben.

Nachfolgend werden Ausführungsbeispiele der erfindungsgemässen Radnabe anhand der Zeichnung näher erläutert.

Es zeigen:

Fig. 1 eine Seitenansicht einer halben Radnabe mit angegossener Bremstrommel,

Fig. 2 eine Ansicht senkrecht zum Schnitt längs der Linie II–II in Fig. 1,

Fig. 3 eine Seitenansicht einer Nabe mit angegossener Bremsscheibe, und

Fig. 4 eine Ansicht senkrecht zum Schnitt längs der Linie IV–IV in Fig. 3.

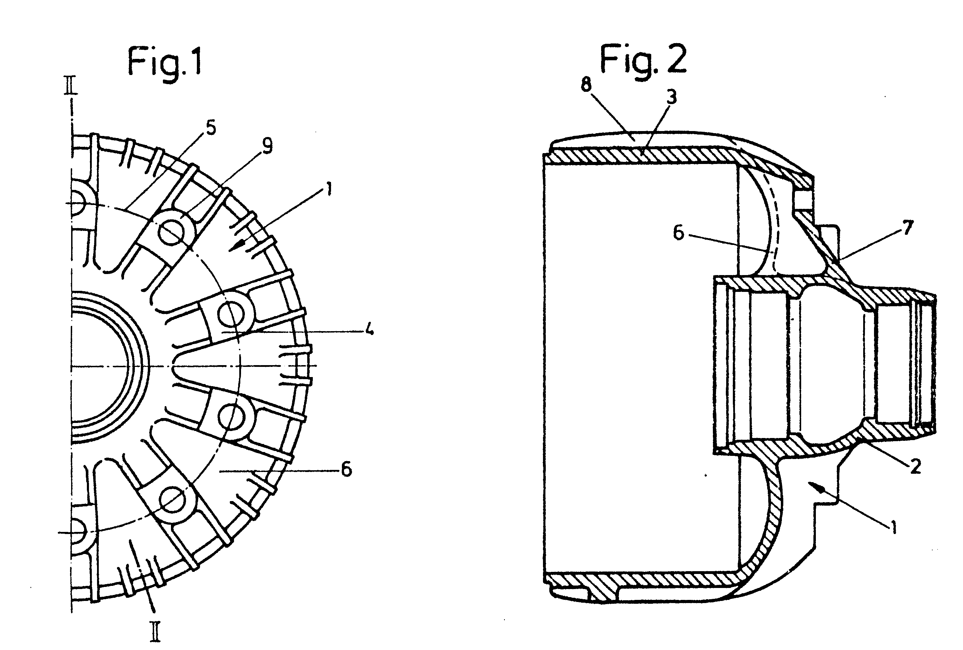

In Fig. 1 und 2 ist eine aus einer Nabe 2 und einer Bremstrommel 3 bestehende Einheit 1 dargestellt, wobei die Nabe 2 und die Bremstrommel 3 einstückig gegossen sind.

Um Material einzusparen und die zu bearbeitenden Flächen 4 auf ein Mindestmass zu reduzieren und möglichst klein zu halten, ist die Radaussenfläche in einem Schnitt längs der Linie 5 etwa wellenförmig ausgebildet. Zwischen den zur Befestigung der Felge dienenden Flächen 4 befinden sich von der Radaussenseite nach innen versetzte Trägerabschnitte 6, welche die Nabe 2 direkt mit der Bremstrommel 3 verbinden.

An den die Flächen 4 aufweisenden Befestigungsabschnitten 7 für die Felge befinden sich jeweils zwei Rippen 8 zur besseren Wärmeableitung sowie zur Erhöhung der Festigkeit der Einheit 1. Diese Rippen 8 erstrecken sich über die Gesamtbreite der Bremstrommel 3, längs deren Umfang sich eine Ringrippe 9 erstreckt, welche die einzelnen Rippen verbindet. Durch diese Rippenkombination wird die Festigkeit der Bremstrommel 3 stark erhöht. Damit die Wärmeableitung noch erhöht wird, dann die Bauhöhe der Rippen 8, 9 vergrössert werden.

Bei der in Fig. 1 gezeigten Ausführung sind zur Befestigung der Felge insgesamt zehn Schrauben vorgesehen. Diese relative grosse Anzahl garantiert eine sehr gleichmässige Kraftverteilung längs des Umfanges der Radnabe, ist aber vorwiegend nur für Lastwagenräder erforderlich bzw. zweckmässig. Bei Rädern für Personenwagen sind dagegen drei bis sechs Befestigungsschrauben pro Felge ausreichend. Ferner können Anzahl und Grösse der Rippen, z.B. je nach Ausführung und Belastung des einzelnen Rades, gewählt werden.

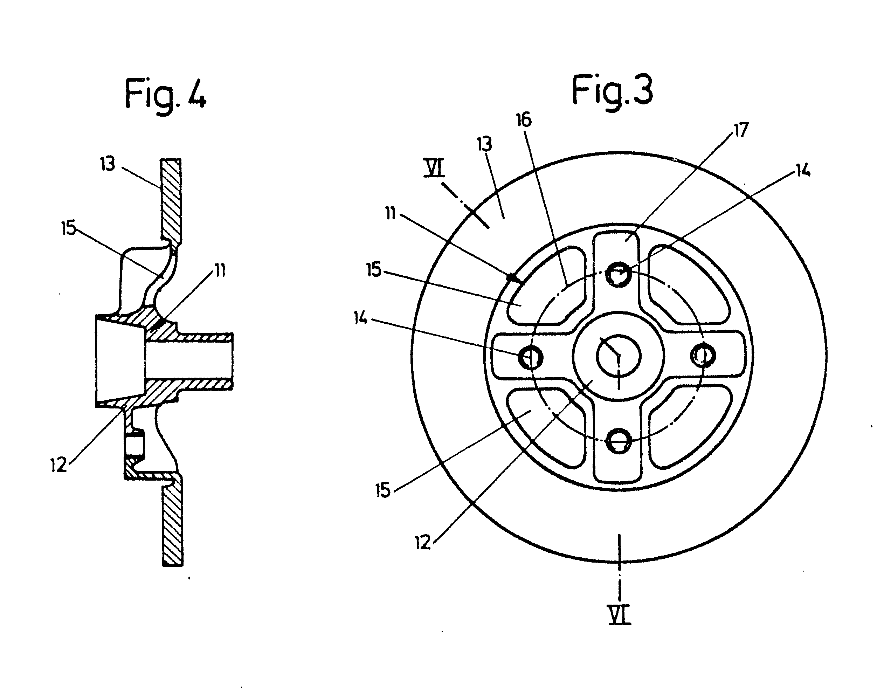

In Fig. 3 und 4 ist eine aus einer Nabe 12 und einer Bremsscheibe 13 bestehende Einheit 11 dargestellt, wobei die Nabe 12 und die Bremsscheibe 13 einstückig gegossen sind.

Die Einheit 11 ist in einer Ausführung für einen Personenwagen gezeigt, wobei vier Befestigungslöcher 14 vorgesehen sind, zwischen welche sich Öffnungen 15 in der Verbindungswand zwischen der Nabe 12 und der Bremsscheibe 13 befinden.

Zur Erhöhung der Festigkeit des tragenden, radial mittleren Teils der Bremsscheibe 13 ist sie in einem Schnitt längs des Kreises 16 wellenförmig ausgebildet, wobei die als Speichen 17 ausgebildeten Teile der Einheit 11 sich zur Radaussenseite, und die sich zwischen den Speichen 17 befindlichen Bereiche sich zur Radinnenseite hin erstrecken. In den letztgenannten Bereichen befinden sich die Öffnungen 15, deren Grösse sich nach der Belastung der Bremsscheibe 13 und deren sonstigen Bemessung richtet.

Durch die in der Achsrichtung (Fig. 4) versetzte Anordnug der Trägerelemente zwischen der Nabe und der Bremsscheibe wird die Festigkeit der Einheit 11 erhöht.

Die gezeigte Ausführung der Nabe mit angegossener Bremsscheibe kann für Lastwagen und Anhänger prinzipiell verwendet werden. Es ist aber in der Regel eine grössere Anzahl von Befestigungen für die Felge vorzusehen. Ferner sind die Abmessungen der zur Lüftung dienenden Öffnungen 15 von Fall zu Fall zu überprüfen.

Für die beschriebenen Ausführungen ist die Wahl eines geeigneten Werkstoffes von wesentlicher Bedeutung.

Eine sehr gute Werkstoffkombination ergibt sich aus der Verwendung von Grauguss für den Bremskörper und Grauguss mit Kugelgraphit für die Nabe. Die Verbindung der unterschiedlichen Werkstoffe zum einstückigen Guss erfolgt in der Art von Verbundgiessverfahren. Daraus resultierten einerseits verbesserte Bremseigenschaften des Bremskörpers und der Vorteil der dünnwandigen Bauweise, die dennoch eine ausreichend hohe Festigkeit gewährleistet.

Durch die geringere Masse der Radnabe wird das Wärmespeichervolumen reduziert. Deshalb werden zwecks besserer Wärmeableitung die beschriebenen Rippen vorgesehen.

Gegenüber den bestehenden Ausführungen von Radnaben mit angegossener Bremstrommel ergibt sich eine grosse Materialreduktion. Ferner ist es gemäss der vorliegenden Ausführung möglich, nicht nur Bremstrommeln, sondern auch Bremsscheiben einstückig mit der Nabe zu giessen.

Die vorliegende Ausführung ermöglicht Materialeinsparungen bis zu 10 kg pro Rad bei Lastwagenausführungen und von 1–2 kg bei Personenwagenausführungen.

## Patentansprüche

1. Radnabe für Personen- oder Lastwagen, wobei die Radnabe mit dem Bremskörper einstückig gegossen ist, dadurch gekennzeichnet, dass die Nabe aus Gusseisen mit Kugelgraphit und der Bremskörper aus Grauguss oder Grauguss mit Vermiculargraphit besteht.

2. Radnabe nach Anspruch 1, dadurch gekennzeichnet, dass der Bremskörper eine Bremstrommel ist.

3. Radnabe nach Anspruch 1, dadurch gekennzeichnet, dass der Bremskörper eine Bremsscheibe ist.

4. Radnabe nach Anspruch 1, dadurch gekennzeichnet, dass die Verbindungswand (6, 7) zwischen der Nabe (2, 12) und dem Bremskörper (3, 13) in einem kreisrunden Querschnitt parallel zum Umfang der Nabe (2, 12) wellenförmig verläuft.

5. Radnabe nach Anspruch 4, dadurch gekennzeichnet, dass die der Radaussenseite zugekehrten Wellenhöhen als Befestigungsflächen (4, 17) für eine Felge ausgebildet sind.

6. Radnabe nach Anspruch 2, dadurch gekennzeichnet, dass die Bremstrommel (3), zur Erhöhung der Festigkeit und zur Wärmeableitung, mit parallel zur Achse verlaufenden Rippen (8) versehen ist.

7. Radnabe nach Anspruch 4 mit Bremsscheibe, dadurch gekennzeichnet, dass die wellenförmige Verbindungswand (6, 7) Öffnungen (15) zur Wärmeableitung aufweist.

8. Radnabe nach den Ansprüchen 5 und 6, dadurch gekennzeichnet, dass die Rippen mindestens teilweise von den Befestigungsflächen (4) wegragen.

## Claims

1. Wheel hub for cars or lorries, the wheel hub being cast in one piece with the brake body, characterised in that the hub is made from cast iron with spheroidal graphite and the brake body from grey cast iron or grey cast iron with vermicular graphite.

2. Wheel hub according to claim 1, characterised in that the brake body is a brake drum.

3. Wheel hub according to claim 1, characterised in that the brake body is a brake disc.

4. Wheel hub according to claim 1, characterised in that the connecting wall (6, 7) between hub (2, 12) and brake body (3, 13) is wavelike in a circular cross-section parallel to the circumference of hub (2, 12).

5. Wheel hub according to claim 4, characterised in that the wave peaks facing the outside of the wheel are constructed as fixing faces (4, 17) for a rim.

6. Wheel hub according to claim 2, characterised in that brake drum (3) is provided with ribs (8) running parallel to the axis for increasing strength and heat dissipation.

7. Wheel hub according to claimn 4 with a brake disc, characterised in that the wavelike connecting wall (6, 7) has openings (15) for heat dissipation purposes.

8. Wheel hub according to claims 5 and 6, characterised in that the ribs at least partly project away from the fixing surfaces (4).

## Revendications

1. Moyeu de roue de véhicule automobile utilitaire ou de tourisme, ce moyeu étant moulé d'une seule pièce avec l'élément de freinage et étant caractérisé par le fait qu'il est en fonte à graphite sphéroïdal, et que l'élément de freinage est en fonte grise ou en fonte grise à graphite vermiculaire.

2. Moyeu de roue selon revendication 1, caractérisé par le fait que l'élément de freinage est un tambour de frein.

3. Moyeu de roue selon revendication 1, caractérisé par le fait que l'élément de freinage est un disque de frein.

4. Moyeu de roue selon revendication 1, caractérisé par le fait que, vue en coupe circulaire faite parallèlement au pourtour du moyeu (2, 12), la paroi de liaison (6, 7) entre le moyeu (2, 12) et l'élément de freinage (3, 13) présente une forme ondulée.

5. Moyeu de roue selon revendication 4, caractérisé par le fait que les sommets des ondulations tournés vers le côté extérieur de la roue sont aménagés en surfaces de fixation (4, 17) pour une jante.

6. Moyeu de roue selon revendication 2, caractérisé par le fait que, pour accroître la résistance mécanique et évacuer la chaleur, le tambour de frein (3) est muni de nervures (8) parallèles à l'axe.

7. Moyeu de roue selon revendication 4, avec disque de frein, caractérisé par le fait que la paroi de liaison ondulée (6, 7) présente des ouvertures (15) d'évacuation de chaleur.

8. Moyeu de roue selon les revendications 5 et 6, caractérisé par le fait que le nervures forment en partie au moins des saillies partant des surfaces de fixation (4).

Fig. 2

Fig. 1

Fig.3

Fig.4